# EUROPEAN PATENT APPLICATION

(11) **EP 3 193 430 A1**
(43) Date of publication of application: **19.07.2017**
(21) Application number: 17151275.9
(22) Date of filing: 12.01.2017
(51) Int. Cl.: H02K 1/18, H02K 1/20

(54) **MOTOR AND ELECTRIC COMPRESSOR**

(30) Priority: 14.01.2016 JP 2016005611
(71) Applicant: Mitsubishi Heavy Industries, Ltd., Tokyo 108-8215 (JP)
(72) Inventor: TAKAHASHI, Kazuki, TOKYO, 108-8215 (JP); KIMATA, Yoshiyuki, TOKYO, 108-8215 (JP); TAKASU, Yogo, TOKYO, 108-8215 (JP); SATO, Hajime, TOKYO, 108-8215 (JP)
(74) Representative: Intès, Didier Gérard André

(57) **Abstract**

There is provided a motor (5) which can reduce strain deformation of a stator (15) and can prevent deterioration in a motor efficiency. The motor (5) includes the stator (15) arranged in a housing (3) and a rotor (17) which is arranged in the stator (15) and rotates around the central axis (CE). A housing recess is formed in a part of an inner surface of the housing (3) in a direction parallel to the central axis (CE) and in a circumferential direction of the central axis (CE). A bottom surface of the housing recess is opposed to a side surface of the stator (15) via a gap (SP). The inner surface of the housing (3) on the outer side of the housing recess is fixed to the side surface of the stator (15).

## Description

### Field

The present invention relates to a motor and an electric compressor.

### Background

An electric compressor includes a compression mechanism arranged in a housing and a motor for driving the compression mechanism. The motor has a stator and a rotor which rotates in the stator. The stator is formed by winding a laminated steel plate. For example, as disclosed in Patent Literatures 1 and 2, the stator is fixed to an inner surface of the housing by shrink-fitting or press-fitting.

### Citation List

### Patent Literature

Patent Literature 1: Japanese Laid-open Patent Publication No. 2006-296010
Patent Literature 2: Japanese Laid-open Patent Publication No. 2012-082792

### Summary

When the stator is fixed by shrink-fitting, a large fastening force acts on the stator, and strain deformation may be generated in the stator. When the strain deformation is generated in the stator, magnetic characteristic of the stator is deteriorated, and a motor efficiency may be lowered.

A purpose of the present invention is to provide a motor and an electric compressor which can reduce strain deformation of a stator and can prevent deterioration in a motor efficiency.

According to the present invention, there is provided a motor comprising: a stator configured to be arranged in a housing; and a rotor configured to be arranged in the stator and to rotate around a central axis, wherein a housing recess is formed in a part of an inner surface of the housing in a direction parallel to the central axis and in a circumferential direction of the central axis, a bottom surface of the housing recess is opposed to a side surface of the stator via a gap, and the inner surface of the housing on the outer side of the housing recess is fixed to the side surface of the stator.

According to the present invention, a space is formed between the side surface of the stator and the inner surface of the housing by forming the housing recess in a part of the inner surface of the housing. Even when the stator is fixed to the housing by shrink-fitting and the like, a fastening force for acting on the stator is released and strain deformation caused by the fastening force is reduced by forming the space. For example, even when the fastening force acts on and deforms the stator, the deformed part is escaped to the space. Accordingly, the strain deformation is reduced. Since the strain deformation of the stator is reduced, deterioration in a motor efficiency is suppressed. Also, since the housing recess is formed in the circumferential direction of the central axis, the space is formed around the stator. Therefore, the fastening force for acting on the stator is effectively released.

According to the present invention, a stator recess may be formed in a part of the side surface of the stator in the direction parallel to the central axis and in the circumferential direction of the central axis.

The space is also formed around the stator by forming the stator recess in a part of the side surface of the stator. Therefore, the fastening force for acting on the stator is released and the strain deformation is reduced.

According to the present invention, there is provided a motor comprising: a stator configured to be arranged in a housing; and a rotor configured to be arranged in the stator and rotate around the central axis, wherein a stator recess is formed in a part of a side surface of the stator in a direction parallel to the central axis and in a circumferential direction of the central axis, a bottom surface of the stator recess is opposed to an inner surface of the housing via a gap, and the side surface of the stator on the outer side of the stator recess is fixed to the inner surface of the housing.

Also, in the present invention, since a space is formed between the side surface of the stator and the inner surface of the housing, a fastening force for acting on the stator is released and strain deformation is reduced. Therefore, deterioration in a motor efficiency is suppressed.

According to the present invention, the motor preferably comprises a rotation preventing mechanism configured to prevent rotation of the stator relative to the housing.

When a part of the stator is separated from the housing, the stator may rotate relative to the housing due to a reaction force of a rotation force of the rotor for acting on the stator. By providing the rotation preventing mechanism, the rotation of the stator is suppressed, and the deterioration in the motor efficiency is suppressed.

According to the present invention, the stator preferably includes a first groove which is formed so as to extend in the direction parallel to the central axis in the side surface of the stator and through which oil is supplied, and the rotation preventing mechanism is provided on the outer side of a bottom surface of the first groove in the radiation direction of the central axis.

In a case where the first groove is provided in the stator, magnetic flux characteristic of the stator may be deteriorated when the rotation preventing mechanism is provided on the inner side of the bottom surface of the first groove in the radiation direction of the central axis. Thus the rotation preventing mechanism is provided on the outer side of the bottom surface of the first groove in the radiation direction of the central axis, and the deterioration in the magnetic flux characteristic of the stator and the deterioration in the motor efficiency are suppressed.

According to the present invention, the rotation preventing mechanism may include a pin member to be coupled with the stator.

The pin member coupled with the stator effectively prevents the rotation of the stator relative to the housing.

According to the present invention, the stator preferably has an opening which is formed in the direction parallel to the central axis and in which the pin member is arranged, and the opening is provided on the outer side of the bottom surface of the first groove in the radiation direction of the central axis.

In a case where the first groove is provided in the stator, the magnetic flux characteristic of the stator may be deteriorated when the opening in which the pin member is arranged is provided on the inner side of the bottom surface of the first groove in the radiation direction of the central axis. Thus the opening in which the pin member is arranged is provided on the outer side of the bottom surface of the first groove in the radiation direction of the central axis, and the deterioration in the magnetic flux characteristic of the stator and the deterioration in the motor efficiency are suppressed.

According to the present invention, there is provided an electric compressor comprising: the motor described above; and a compression mechanism configured to be operated by power generated by the motor.

According to the present invention, since the electric compressor comprises the motor of which deterioration in the motor efficiency is suppressed, an efficiency of an electric compressor is improved.

According to the present invention, a motor and an electric compressor are provided which can reduce strain deformation of a stator and can prevent deterioration in a motor efficiency.

### Brief Description of Drawings

FIG. 1 is a cross sectional side view of an exemplary electric compressor according to a first embodiment.
FIG. 2 is an enlarged view of a part A in FIG. 1.
FIG. 3 is a schematic exploded perspective view of a motor according to the first embodiment.
FIG. 4 is a schematic diagram to describe a positional relationship between a stator and a hole according to the first embodiment.
FIG. 5 is a cross sectional view of a partially enlarged housing and stator according to a second embodiment.
FIG. 6 is a schematic exploded perspective view of a motor according to the second embodiment.
FIG. 7 is a schematic exploded perspective view of a motor according to a third embodiment.
FIG. 8 is a view on arrow B-B in FIG. 7.
FIG. 9 is a schematic diagram of a relationship between a hole and a recess provided in a stator according to a third embodiment.

### Description of Embodiments

Embodiments of the present invention are described below with reference to the drawings. However, the present invention is not limited to the embodiments. Components of each embodiment to be described below can be appropriately combined. There are cases where a part of the components is not used.

### <First embodiment>

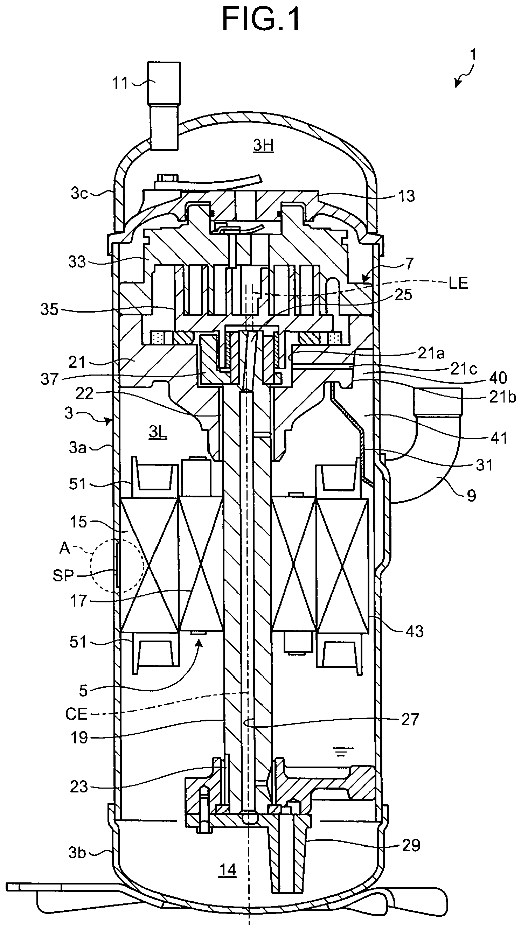

A first embodiment is described. FIG. 1 is a cross sectional side view of an exemplary electric compressor 1 according to the present embodiment. In the present embodiment, the electric compressor 1 is a hermetic electric scroll compressor.

As illustrated in FIG. 1, the electric compressor 1 includes a housing 3, a motor 5 provided in the housing 3, a rotary shaft 19, and a compression mechanism 7 which is connected to the rotary shaft 19 and is operated by power generated by the motor 5. The rotary shaft 19 is provided in the housing 3 and rotates around a central axis CE by the power generated by the motor 5.

The housing 3 is made of metal such as steel and aluminum. The housing 3 includes a cylindrical housing body 3a which extends in a direction parallel to the central axis CE, a bottom member 3b which closes a lower end of the housing body 3a, and a lid member 3c which closes an upper end of the housing body 3a. A suction pipe 9 is provided on the side of the housing body 3a. The suction pipe 9 introduces gas into the housing 3. A discharge pipe 11 is provided on the upper part of the lid member 3c. The discharge pipe 11 discharges gas compressed by the compression mechanism 7. An oil sump 14 where oil can be stored is provided on the bottom of the housing 3. A discharge cover 13 is provided between the housing body 3a and the lid member 3c. The discharge cover 13 divides a space in the housing 3 into a low pressure chamber 3L and a high pressure chamber 3H.

The motor 5 includes a stator 15 arranged in the housing 3, a rotor 17 which is arranged in the stator 15 and rotates around the central axis CE, and a resin bobbin 51 connected to the stator 15. The stator 15 includes a laminated steel plate. The rotor 17 is connected to the rotary shaft 19. The resin bobbin 51 is used for forming a winding (coil) of the stator 15. The resin bobbins 51 are provided on the upper part and the lower part of the stator 15 and support a coil. The stator 15, the rotor 17, the resin bobbin 51, and the rotary shaft 19 are arranged in the low pressure chamber 3L of the housing 3. The motor 5 rotates the rotor 17 with electric power supplied from an external power source. For example, the rotor 17 rotates at a speed equal to or more than 90 rps. The rotation of the rotary shaft 19 rotates the rotor 17.

An upper end of the rotary shaft 19 is rotatably supported by an upper bearing 22. A lower end of the rotary shaft 19 is rotatably supported by a lower bearing 23. On the upper end of the rotary shaft 19, an eccentric pin 25 is provided which is projected upwards along an eccentric shaft LE deflected to the central axis CE. The upper end of the rotary shaft 19 having the eccentric pin 25 is connected to the compression mechanism 7.

The rotary shaft 19 and the eccentric pin 25 have an oil supply passage 27. The lower end of the rotary shaft 19 is arranged in the oil sump 14. An oil pump 29 provided at the lower end of the rotary shaft 19 supplies the oil stored in the oil sump 14 to the oil supply passage 27 of the rotary shaft 19 with the rotation of the rotary shaft 19.

The upper bearing 22 is provided in a bearing member 21. The bearing member 21 is fixed to an inner wall surface of the housing body 3a. The bearing member 21 rotatably supports the rotary shaft 19 via the upper bearing 22. A recess 21a provided on an upper surface of the bearing member 21 houses a drive bush 37 and stores the oil supplied by the oil pump 29 via the oil supply passage 27. The oil stored in the recess 21a is supplied to the compression mechanism 7. An oil discharge passage 21c formed in the bearing member 21 discharges the oil stored in the recess 21a to a space 40 between an end face 21b of the bearing member 21 and the inner wall surface of the housing body 3a.

The compression mechanism 7 includes a fixed scroll 33, an orbiting scroll 35, and the drive bush 37. When the motor 5 is operated and the rotary shaft 19 rotates, the orbiting scroll 35 orbits. In the compression mechanism 7, low-pressure gas introduced into the low pressure chamber 3L in the housing 3 via the suction pipe 9 is suctioned to a compression chamber between the fixed scroll 33 and the orbiting scroll 35 and also is compressed, by orbiting of the orbiting scroll 35. The compressed high-pressure gas is discharged from the fixed scroll 33 to the high pressure chamber 3H by opening the discharge cover 13 and is discharged to the outside of the housing 3 via the discharge pipe 11.

A guide plate 31 is provided below the bearing member 21. The guide plate 31 forms a tunnel 41, which leads the oil discharged from the oil discharge passage 21c to the oil sump 14 of the housing 3, between the guide plate 31 and the inner wall surface of the housing body 3a.

In the operation of the electric compressor 1, the oil in the oil sump 14 is pumped by the oil pump 29 and moves through the oil supply passage 27 formed in the rotary shaft 19. Then, the lower bearing 23 and the upper bearing 22 are lubricated with the oil. The drive bush 37 is lubricated with the oil discharged from the upper end of the oil supply passage 27. After that, the oil is stored in the recess 21a provided at the center of the upper surface of the bearing member 21. The oil which has been discharged from the oil supply passage 27 and excessively stored in the recess 21a is discharged from an exit of the oil discharge passage 21c provided on the end face 21b to the space 40 through the oil discharge passage 21c. The oil discharged from the oil discharge passage 21c to the space 40 is supplied to the tunnel 41 between the guide plate 31 and the inner wall surface of the housing body 3a. After passing through the tunnel 41, the oil supplied to the tunnel 41 passes through a first groove 43 provided on side surface of the stator 15 and is transmitted to the oil sump 14.

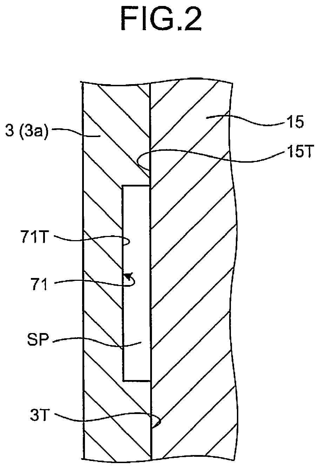

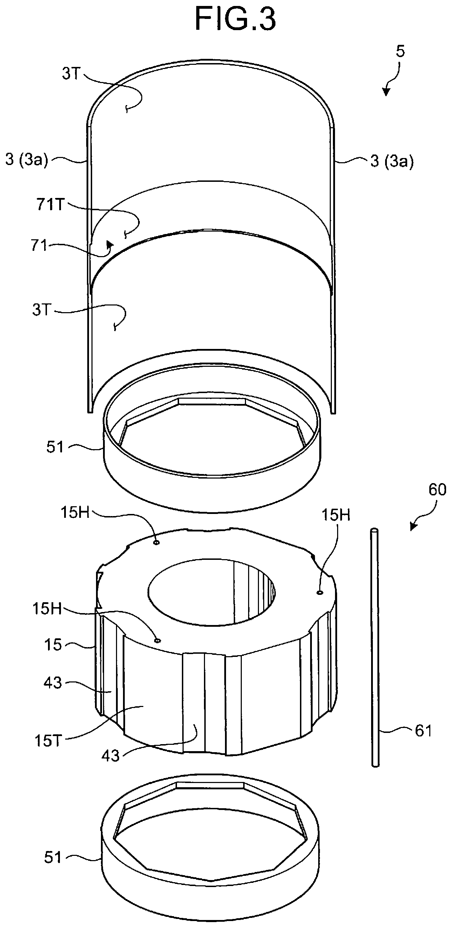

FIG. 2 is an enlarged view of a part A in FIG. 1. FIG. 3 is a schematic exploded perspective view of the motor 5 according to the present embodiment.

As illustrated in FIGS. 1 to 3, a housing recess 71 is formed in a part of the inner surface of the housing 3 in the direction parallel to the central axis CE. In the present embodiment, the housing recess 71 is formed at a position opposed to the center of the stator 15 in the direction parallel to the central axis CE. The housing recess 71 is formed in a circumferential direction of the central axis CE.

A bottom surface 71T of the housing recess 71 is opposed to a side surface 15T of the stator 15 via a gap.

A space SP is formed between the housing recess 71 and the stator 15. The space SP is provided in the circumferential direction of the central axis CE so as to surround the stator 15. An inner surface 3T of the housing 3 outside the housing recess 71 is fixed to the side surface 15T of the stator 15. In the present embodiment, the stator 15 is fixed to the housing 3 by shrink-fitting.

As illustrated in FIGS. 1 and 3, the stator 15 has the first grooves 43 which extend in the direction parallel to the central axis CE on the side surface of the stator 15. The plurality of first grooves 43 is provided in the circumferential direction of the central axis CE. As described above, the oil can pass through the first groove 43, and the oil passed through the first groove 43 is transmitted to the oil sump 14.

In the present embodiment, the motor 5 has a rotation preventing mechanism 60 which prevents the rotation of the stator 15 relative to the housing 3. The rotation preventing mechanism 60 prevents the rotation of the stator 15 caused by a reaction force of the rotation force of the rotor 17 which acts on the stator 15. In the present embodiment, the space SP is formed between the stator 15 and the housing 3, and thus a part of the stator 15 is apart from the housing 3. That is, although the stator 15 is fixed to the housing 3 via the side surface 15T and the inner surface 3T, the stator 15 is not directly fixed to the housing 3 in the space SP. Therefore, when the rotation force of the rotor 17 is strong, the stator 15 may rotate relative to the housing 3 due to the reaction force of the rotation force of the rotor 17. The rotation preventing mechanism 60 prevents the rotation of the stator 15 relative to the housing 3.

In the present embodiment, the rotation preventing mechanism 60 includes a pin member 61 for coupling the housing 3 with the stator 15. A hole 15H is formed in the stator 15 in the direction parallel to the central axis CE. The holes 15H is an opening in which the pin member 61 is arranged. By arranging the pin member 61 in the hole 15H and fixing the pin member 61 to the housing 3, the rotation of the stator 15 relative to the housing 3 is prevented.

In the present embodiment, a plurality of holes 15H (three holes in the example illustrated in FIG. 3) is provided in the circumferential direction of the central axis CE. By arranging the pin member 61 in each of the plurality of holes 15H, the rotation of the stator 15 is effectively prevented.

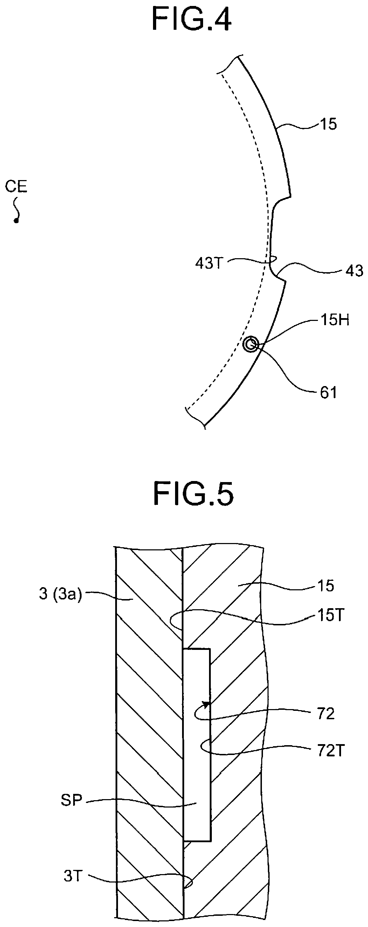

FIG. 4 is a schematic diagram to describe a positional relationship between the stator 15 and the hole 15H according to the present embodiment. As illustrated in FIG. 4, the hole 15H is provided on the outer side of a bottom surface 43T of the first groove 43 in a radiation direction of the central axis CE.

In a case where the first groove 43 is provided in the stator 15, magnetic flux characteristic of the stator 15 may be deteriorated when the hole 15H in which the pin member 61 is arranged is provided on the inner side of the bottom surface 43T of the first groove 43 in the radiation direction of the central axis CE. When the hole 15H in which the pin member 61 is arranged is provided on the outer side of the bottom surface 43T of the first groove 43 in the radiation direction of the central axis CE, the deterioration in the magnetic flux characteristic of the stator 15 is suppressed, and the deterioration in the motor efficiency is suppressed.

As described above, according to the present embodiment, the space SP is formed between the side surface of the stator 15 and the inner surface of the housing 3 by forming the housing recess 71 in a part of the inner surface of the housing 3. Even when the stator 15 is fixed to the housing 3 by shrink-fitting, the fastening force for acting on the stator 15 is released and the strain deformation caused by the fastening force is reduced by forming the space SP. For example, even when the fastening force of the stator 15 is acting on and deforming the stator 15, the deformed part is escaped to the space. Therefore, the strain deformation of the stator 15 is reduced. Since the strain deformation of the stator 15 is reduced, the deterioration in the motor efficiency is suppressed. Also, since the housing recess 71 is formed in the circumferential direction of the central axis CE, the space SP is formed around the stator 15. Therefore, the fastening force for acting on the stator 15 is effectively released, and the strain deformation of the stator 15 is reduced.

Also, in the present embodiment, the rotation of the stator 15 relative to the housing 3 is prevented by providing the rotation preventing mechanism 60. Therefore, the deterioration in the efficiency of the motor 5 is suppressed.

Also, in the present embodiment, the stator 15 has the first groove 43 through which the oil passes, and the rotation preventing mechanism 60 is provided on the outer side of the bottom surface 43T of the first groove 43 in the radiation direction of the central axis CE. This prevents the deterioration in the magnetic flux characteristic of the stator 15 and the deterioration in the motor efficiency.

Also, in the present embodiment, the rotation preventing mechanism 60 includes the pin member 61 to be coupled with the stator 15. The pin member 61 effectively prevents the rotation of the stator 15 relative to the housing 3.

In the present embodiment, the stator 15 is fixed to the housing 3 by shrink-fitting. The stator 15 may be fixed to the housing 3 by welding. The stator 15 may be fixed to the housing 3 by caulking.

In the present embodiment, the housing recess 71 is provided so as to be opposed to the center of the stator 15 in the direction parallel to the central axis CE. The housing recess 71 may be provided so as to be opposed to at least one of the upper part and the lower part of the stator 15. Also, a plurality of housing recesses 71 may be provided in the direction parallel to the central axis CE.

### <Second embodiment>

A second embodiment is described. In the following description, the components which are the same as or similar to those in the above embodiment are denoted with the same reference numerals, and the description for the components is simplified or omitted.

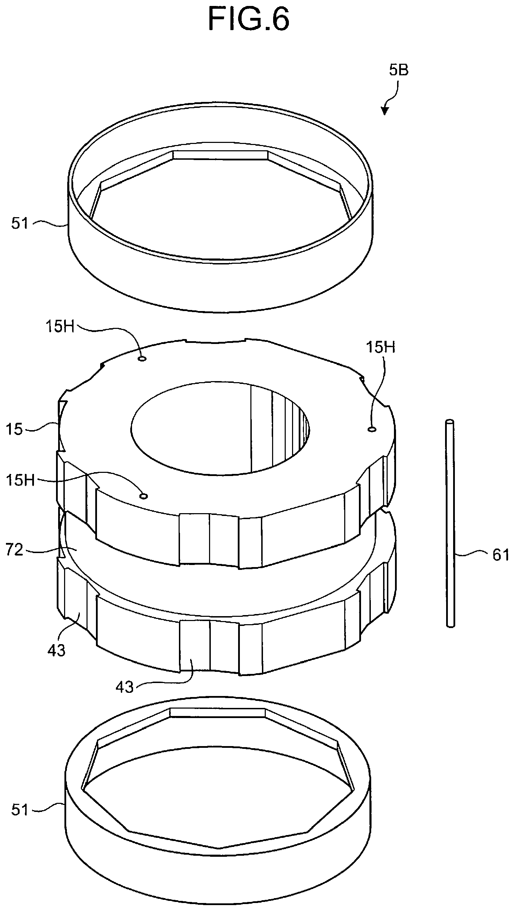

FIG. 5 is a cross sectional view of a partially enlarged housing 3 and stator 15 according to the present embodiment. FIG. 6 is a schematic exploded perspective view of a motor 5B having the stator 15 and resin bobbins 51 according to the present embodiment.

As illustrated in FIGS. 5 and 6, in the motor 5B according to the present embodiment, a stator recess 72 is formed in a part of the side surface of the stator 15 in a direction parallel to a central axis CE. In the present embodiment, the stator recess 72 is formed at the center of the stator 15 in the direction parallel to the central axis CE. The stator recess 72 is formed in the circumferential direction of the central axis CE.

A bottom surface 72T of the stator recess 72 is opposed to the inner surface 3T of the housing 3 via a gap. A space SP is formed between the stator recess 72 and the housing 3. The space SP is provided in the circumferential direction of the central axis CE so as to surround the stator 15. In the present embodiment in which the side surface 15T of the stator 15 on the outer side of the stator recess 72 is fixed to the inner surface 3T of the housing 3, the stator 15 is fixed to the housing 3 by shrink-fitting.

In the present embodiment, the motor 5B also includes a rotation preventing mechanism 60 which prevents the rotation of the stator 15 relative to the housing 3. The rotation preventing mechanism 60 includes a pin member 61 for coupling the housing 3 with the stator 15.

As described above, according to the present embodiment, the space SP is formed between the stator 15 and the housing 3 by forming the stator recess 72 in a part of the side surface of the stator 15. Similar to the above embodiment, the formation of the space SP reduces the strain deformation of the stator 15 and the deterioration in the motor efficiency. Also, since the stator recess 72 is formed in the circumferential direction of the central axis CE, the space SP is formed around the stator 15. Therefore, the fastening force for acting on the stator 15 is effectively released, and the strain deformation of the stator 15 is reduced.

Also, in the present embodiment, the stator 15 may be fixed to the housing 3 by welding or caulking.

In the present embodiment, the stator recess 72 is provided at the center of the stator 15 in the direction parallel to the central axis CE. The stator recess 72 may be provided in at least one of the upper part and the lower part of the stator 15. Also, the plurality of stator recesses 72 may be provided in the direction parallel to the central axis CE. This is similarly applied to the following embodiment.

### <Third embodiment>

A third embodiment is described. In the following description, the components which are the same as or similar to those in the above embodiment are denoted with the same reference numerals, and the description for the components is simplified or omitted.

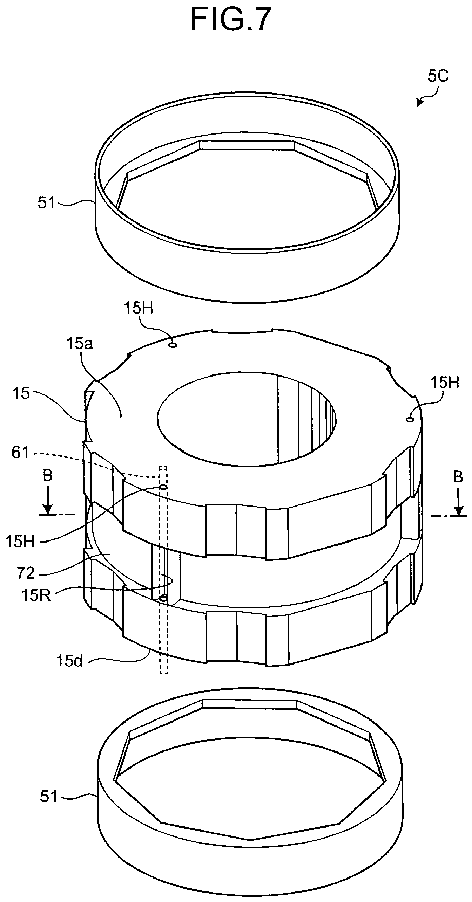

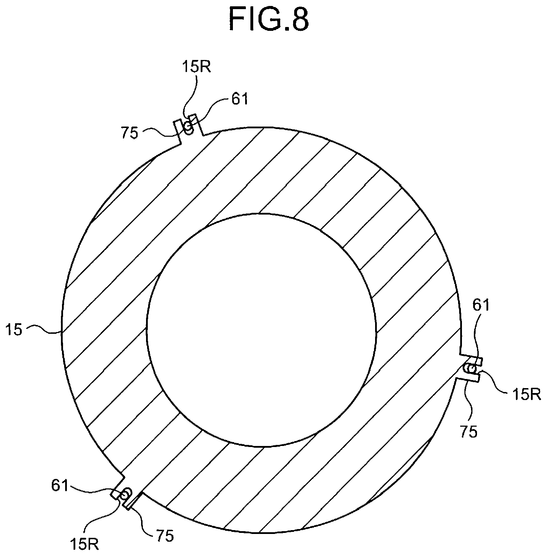

The third embodiment is a modification of the second embodiment. FIG. 7 is a schematic exploded perspective view of a stator 15 and resin bobbins 51 of a motor 5C according to the present embodiment. FIG. 8 is a view on arrow B-B in FIG. 7.

Similar to the second embodiment, a stator recess 72 is provided in the side surface of the stator 15. In the present embodiment, the stator 15 has a projecting member 75 which is projected outside from the bottom surface of the stator recess 72 in the radiation direction of the central axis CE. A recess 15R which is an opening where a pin member 61 is arranged is provided in the projecting member 75. A top end of the projecting member 75 is arranged on the inner side of the side surface of the stator 15, which has contact with the inner surface of the housing 3, in the radiation direction of the central axis CE.

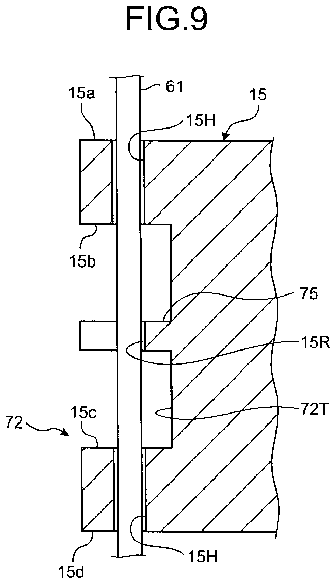

FIG. 9 is a schematic diagram of a relationship between a hole 15H and the recess 15R provided in the stator 15. The hole 15H is provided so as to pass through an upper surface 15a of the stator 15 and a lower surface 15b facing to the stator recess 72. Also, the hole 15H is provided so as to pass through an upper surface 15c facing to the stator recess 72 and a lower surface 15d of the stator 15. The hole 15H corresponds to the recess 15R. The pin member 61 is arranged in the hole 15H and the recess 15R.

As described above, according to the present embodiment, the pin member 61 is more stably held by providing the recess 15R in addition to the hole 15H. Therefore, the rotation of the stator 15 is more effectively prevented by the pin member 61.

In the above embodiments, both of the housing recess 71 and the stator recess 72 may be provided.

## Claims

1. A motor (5) comprising:
a stator (15) configured to be arranged in a housing (3); and
a rotor (17) configured to be arranged in the stator (15) and to rotate around a central axis (CE), wherein
a housing recess (71) is formed in a part of an inner surface (3T) of the housing (3) in a direction parallel to the central axis (CE) and in a circumferential direction of the central axis (CE),
a bottom surface (71T) of the housing recess (71) is opposed to a side surface (15T) of the stator (15) via a gap (SP), and
the inner surface (3T) of the housing (3) on the outer side of the housing recess (71) is fixed to the side surface (15T) of the stator (15).

2. The motor (5) according to claim 1, wherein
a stator recess (72) is formed in a part of the side surface (15T) of the stator (15) in the direction parallel to the central axis (CE) and in the circumferential direction of the central axis (CE).

3. A motor (5) comprising:
a stator (15) configured to be arranged in a housing (3) ; and
a rotor (17) configured to be arranged in the stator (15) and to rotate around the central axis (CE), wherein
a stator recess (72) is formed in a part of a side surface (15T) of the stator (15) in a direction parallel to the central axis (CE) and in a circumferential direction of the central axis (CE),
a bottom surface (72T) of the stator recess (72) is opposed to an inner surface (3T) of the housing (3T) via a gap (SP), and
the side surface (15T) of the stator (15) on the outer side of the stator recess (72) is fixed to the inner surface (3T) of the housing (3).

4. The motor (5) according to any one of claims 1 to 3, comprising:
a rotation preventing mechanism (60) configured to prevent rotation of the stator (15) relative to the housing (3).

5. The motor (5) according to claim 4, wherein
the stator (15) includes a first groove (43) which is formed so as to extend in the direction parallel to the central axis (CE) in the side surface (15T) of the stator (15) and through which oil is supplied, and
the rotation preventing mechanism (60) is provided on the outer side of a bottom surface (43T) of the first groove (43) in the radiation direction of the central axis (CE).

6. The motor (5) according to claim 5, wherein
the rotation preventing mechanism (60) includes a pin member (61) to be coupled with the stator (15).

7. The motor (5) according to claim 6, wherein
the stator (15) has an opening (15H) which is formed in the direction parallel to the central axis (CE) and in which the pin member (61) is arranged, and
the opening (15H) is provided on the outer side of the bottom surface (43T) of the first groove (43) in the radiation direction of the central axis (CE).

8. An electric compressor (1) comprising:
a motor (5) according to any one of claims 1 to 7; and
a compression mechanism (7) configured to be operated by power generated by the motor (5).
